# EUROPEAN PATENT SPECIFICATION

(11) **EP 1 219 080 B1**
(45) Date of publication and mention of the grant of the patent: **09.02.2011**
(21) Application number: 00970406.5
(22) Date of filing: 05.10.2000
(51) Int. Cl.: H04L 29/06

(54) **TRANSFER OF PACKET DATA FROM A NETWORK SERVER TO A MOBILE STATION OVER A DIGITAL RADIO COMMUNICATION NETWORK**
ÜBERTRAGUNG VON PAKETDATEN VON EINEM NETZSERVER ZU EINER MOBILSTATION ÜBER EIN DIGITALES FUNKKOMMUNIKATIONSNETZ
TRANSFERT DE DONNEES EN PAQUETS DEPUIS UN SERVEUR DE RESEAU VERS UNE STATION MOBILE VIA UN RESEAU DE COMMUNICATION RADIO NUMERIQUE

(30) Priority: 08.10.1999 SE 9903637
(43) Date of publication of application: 03.07.2002
(73) Proprietor: MICROSOFT CORPORATION, Redmond, WA 98052 (US)
(72) Inventor: JOHANSSON, Stefan, 111 29 Stockholm (SE)
(74) Representative: Henningsson, Gunnar
(86) International application number: PCT/SE2000/001932
(87) International publication number: WO 2001/028168

(56) References cited:
- WO-A1-97/08906
- WO-A1-97/26764
- WO-A1-99/05828
- WO-A1-99/43143
- WO-A2-99/17579

## Description

### Technical field of the invention

The present invention relates to the immediate transfer of packet data from a network server to a mobile communication station over a digital radio communication network.

### Technical background

With a digital radio communication network supporting packet data transfer, wireless access to external packet data networks, such as the Internet, corporate intranets and X.25 networks, can be offered to the users of the digital radio communication network. Thus, the digital radio communication network will be a wireless extension of, for example, the Internet and existing X.25 networks. Subscribers to the radio network will be able to use most of the applications designed for these data packet protocols, such as Web browsing and e-mail etc., from their wireless equipment with which they access the digital radio communication network. Also, the users do not have to dial into an Internet Service Provider (ISP).

An example of a digital radio communication network which will be able to transfer packet data is the Global System for Mobile Communication (GSM) network. The packet data transferring capabilities of the GSM network is provided by the General Packet Radio Service (GPRS). GPRS is a standardisation from the European Telecommunications Standard Institute (ETSI) on packet data in GSM systems.

There are basically two different techniques to initiate a packet data transfer between a user of a packet data service provided by a digital radio communication network and a packet data network server being able to communicate with the digital radio communication network, user initiated packet data transfer and network initiated packet data transfer.

The first technique, user initiated packet data transfer, which is the default technique used, means that the user has to switch on his mobile communication station, after which the station identifies itself to those parts of the digital radio communication network that provides the packet data service and then initiates an activation of a packet data service to be used by the mobile communication station. The step of identifying the station involves providing the radio network with the identity and the whereabouts of the station. The activation of a packet data service is needed in order for the radio network to allocate the network resources needed when the station uses the packet data service. The user can then use the service for requesting information from network servers, download files etc.

The second technique, network initiated packet data transfer, is used when pushing information to the wireless communication station. Three important prerequisites for this technique are that the station has to be switched on, that the station has identified itself to those parts of the digital radio communication network that provides the packet data service, and that a packet data protocol address has been allocated to the station. The radio network is then able to on its own activate a packet data service for the station.

In both of these techniques, the activation of a packet data service involves certain procedures to be performed in the network for initialising the service. After activation, packet data addressed to the Packet Data Protocol (PDP) address that has been allocated to a mobile communication station will be routed to that station. A PDP address can be allocated to the station either as a static or a dynamic PDP address. Thus, the PDP address to be used by a server wishing to push data to a mobile communication station, i.e. to transfer data without the station having specifically requested the data, is either a permanent (static) or a temporary (dynamic) address allocated to that station.

A static PDP address is permanently allocated to a particular mobile communication station, i.e. a subscriber, and must be stored in some kind of repository in, or connected to, the operator's digital radio communication network, together with other kind of data and information defining a subscribers subscription with the operator. A dynamic PDP address on the other hand, is only temporarily allocated to a subscription as long as the subscriber wishes to use the packet data service provided by the radio network. The dynamic PDP address must also be stored in some kind of repository in, or connected to, the operator's network. This PDP address must be known to the server before transmitting any packet data to the station.

The PDP address, irrespective of whether it is static or dynamic, needs to be known to a server that wishes to transfer packet data to the station. The PDP address can become known to the server by making an inquiry to the appropriate repository, possibly different repositories depending on whether static or dynamic addresses are used, in the operator's digital radio communication network.

A disadvantage with having to inquire the digital radio communication network for a particular PDP address, is that it may result in a heavy load on the radio network and/or any server connected to the radio network and storing the above mentioned repository. This is due to the generated signalling against the repository storing PDP addresses. If the signalling against the repository is too extensive, other kind of inquiries for subscription data, vital to the operation of the radio network, may be delayed or blocked. A repository could even be caused to collapse by an inquiring server, if the server were to perform a so called spamming, i.e. executing a large number of inquires towards the radio network and the repository. A repository storing subscription data in the network is perhaps the most important part of the network, since if the repository goes down, the hole network goes down.

Additionally, if using static PDP addresses, wherein an address is permanently allocated to a subscription, one faces the possibility of running out of addresses. In the most popular packet data network in use today, the Internet, this problem is soon a reality because of the tremendous growth of users and appliances that wish to have an Internet Protocol address.

The solution to the problem of running out of static addresses, is to have a defined set of addresses in the network from which dynamic addresses are temporarily allocated to the subscribers. However, when using dynamic addresses, one faces the problem that the address allocated to a subscriber suddenly may change. For example, if a mobile communication station having a dynamic address allocated to it is switched off, the address will be de-allocated. When switching the station on again and activating the packet data service, it is very likely that another address will be temporarily allocated to the station. Thus, a server needs to inquire about the station's PDP address each time a new packet data transfer is started, resulting in the disadvantage described above regarding generated signalling load in the radio network.

Furthermore, when personal telephone numbers are offered to the subscribers, the telephone numbers will be portable between different operators and therefore no longer reflect with what operator a user has his subscription. When making an ordinary telephone call to a mobile station having a portable number, the call will be routed via some kind of repository associating each number with the user's defined selection of operator. Such mechanism does however not exist for routing a PDP address request, concerning what PDP address that is allocated to a particular subscription, to the right operator. Thus, when using portable numbers, a server wishing to push data to a mobile communication station does not know to what operator, and thus, to what operator repository, an inquiry about a user's PDP address should be directed. Also, there exists no mechanism today that will handle the routing of such an inquiry to the right operator repository.

Another disadvantage is that if the radio network does not provide a store and forward facility, a server wishing to push data to a subscriber needs to know that the subscriber has a working PDP connection, otherwise data packets from the server addressed to the subscriber will be lost.

In WO, 99/17579, A2 a method of paging a mobile subscriber to establish a mobile-terminated packet-switched connection is disclosed. A GGSN node (Gateway GPRS Support Node) detects that packet data is being supplied to the mobile station. The GGSN knows the identifiers of the mobile station both for a packet switched and for a circuit switched connection, and the GGSN initiates, via an SMS-C (Short Message Service Centre), the transmission of a short message to the mobile station commanding it to switch to standby mode. In response to the short message the mobile station switches to standby mode, in which mode it listens to a packet data paging channel.

In WO, 97/08906, A1 the transmission of e-mail over a mobile telephone network with the aid of a short text message routing means is disclosed. A mobile station decodes an agent having a data field included by a received short text message in order to initiate transmission of an e-mail to the mobile station over a circuit switched connection.

In WO, 99/05828, A1 it is disclosed that a mobile host establishes a packet session during which plural application flows are communicated with an external entity. The application is directed towards defining and reserving different quality of service parameters for different ones of the application flows.

### Summary of the invention

An object of the present invention is to overcome the disadvantages and drawbacks described above that are present when a server in a packet data network, which network is arranged in communication with a digital radio communication network, is to initialise the transfer of packet data to a mobile communication station in the digital radio communication network.

According to the present invention, said object is achieved by a method, an arrangement and a program storage device having the features as defined in the appended claims.

The present invention is based on the idea that a network server, that wants to transfer packet data to a mobile communication station via a digital radio communication network, requests the mobile station to set up a packet data protocol connection with the server. The request is accomplished by sending a message to the station, via a message service provided by the radio network, using a subscriber's unique user identification number. In reply to the received message, the station identifies itself to the packet radio network, if not already identified, activates a packet data service provided by the packet radio network, if not already activated, and establishes a PDP connection with the requesting server. Using this PDP connection, the server may transfer packet data to the mobile communication station.

According to a first aspect of the invention, there is provided a method for initiating immediate transfer of packet data from a network server to a mobile communication station over a digital radio communication network, preferably a Global System for Mobile Communication (GSM) network providing a General Packet Radio Service (GPRS), including the steps of:
sending a message to the mobile communication station using a message service, preferably a Short Message Service, provided by the digital radio communication network, said message including a first packet data network address, preferably an Internet Protocol or an X.25 protocol address, of said network server;
extracting the first packet data network address from said message by means of an application executing on the mobile communication station; and
establishing, from the application of the mobile communication station having a second packet data network address, a packet data protocol session with said network server using said first packet data network address,
whereby the network server is able to transfer packet data to the mobile communication station and the application using said packet data protocol session.

According to a second aspect of the invention there is provided an arrangement at a mobile communication station for facilitating immediate transfer of packet data from a network server to a mobile Communication station over a digital radio communication network, preferably a Global System for Mobile Communication (GSM) network providing a General Packet Radio Service (GPRS), including:
first receiving means for receiving a message from a message service, preferably a Short Message Service, provided by the digital radio communication network, said message including a first packet data network address, preferably an Internet Protocol or an X.25 protocol address, of said network server;
extracting means for extracting the first packet data network address from said message; and
packet data protocol means for establishing a packet data protocol session with said network server using said first packet data network address, and for receiving packet data from the network server addressed to a second packet data network address, which second packet data network address is allocated to the mobile communication station.

According to a third aspect of the invention there is provided a program storage device containing a sequence of instructions for a microprocessor to perform the steps of:
causing a mobile communication station to receive a message from a message service, preferably a Short Message Service, provided by a digital radio communication network, preferably a Global System for Mobile Communication (GSM) network providing a General Packet Radio Service (GPRS), said message including a first packet data network address, preferably an Internet Protocol or an X.25 protocol address, of said network server;
causing the mobile communication station to extract the first packet data network address from said message;
causing the mobile communication station, to which a second packet data network address is allocated, to establish a packet data protocol session with said network server using said first packet data network address; and
causing the mobile communication station to receive packet data, addressed to the second packet data network address, from the network server via said packet data protocol session.

According to a fourth aspect of the invention there is provided a message data format used for initiating the transfer of packet data from a network server to a mobile communication station without interaction with a user of the mobile communication station, the mobile communication station being the addressee of a message having said message data format, the message data format including:
a field with an activation code which is to be decoded by an application program in said mobile communication station, said activation code indicating to the application program that said message was initiated by a network server wishing to transfer packet data to the mobile communication station, wherein further fields of the message data format are decoded by said application program and thereby facilitating the reception of packet data from the network server; and
a field with a packet data network address which is to be decoded by said application program, said packet data network address indicating to the application program which network server it should establish a packet data protocol session with.

Thus, a network server does not have to inquire a repository within, or connected to, the radio network for a PDP address to a station, and will therefore not contribute to a signalling load against the repository. In accordance with what has been described above, the invention provides this advantage irrespective of whether static or dynamic PDP addresses are used in the radio network system. Furthermore, in case of number portability, the question where to direct an inquiry for a PDP address will never arise.

Preferably, if the identity and/or the location of the subscriber is not known to the packet data service part of the radio network, the application initiates the procedures in the radio network of identifying and/or location updating the subscriber.

Preferably, if the subscriber does not have a packet data service activated at the radio network, the application requests that the radio network should activate such a packet data service. In connection with such an activation, the radio network allocates a temporary packet data protocol address to the station. Alternatively, the temporary PDP address is allocated to the station by a server, a corporate server or a server of an Internet Service Provider, which is connected to the radio network.

It is also preferred that the application includes means for examining an activation code in said message. This code identifies the message from a server wishing to push data from other messages received by the station. The application will access the network server using the packet data protocol, only if the correct activation code is found. Alternatively, if the subscriber has not identified itself to the packet data service part of the radio communication network, the mobile station performs such an identification only if the message received included the correct activation code.

Furthermore, the application preferably includes means for examining a service indication field of the message received by the mobile station. The application is arranged to either display a text message on a display of the mobile station or play a voice message using a loudspeaker of the mobile station, the message being derived from the service indication field. If the user replies negatively to the message, the application will not access the network server, or, if the mobile station has not been identified, it will not identify the mobile station subscriber to the radio network.

The application furthermore has means for extracting a ciphering key from the received message and for calculating a response based on this key. The response is sent together with the identification number of the mobile station subscriber to the network server for verification of the subscriber.

Thus, the invention is advantageous since it enables pushing of packet data to a mobile communication station even if the station has not identified itself to the packet data service part of the digital radio communication network, or, if it has identified itself, if there is no active packet data service associated with the mobile communication station, and, thus, no valid packet data protocol address allocated to the station. With a message, via a message service and initialised by the external network server wishing to push data, to the mobile communication station, the steps of identifying the station to the radio packet network, if not already identified, and activating a packet data service, if not already activated, are initialised from the network.

It does not matter if the subscriber has identified itself or not for the packet data service part of the digital radio communication network, if the subscriber has been allocated a PDP address or not, or, when the subscriber has an allocated PDP address, if the PDP address is static or dynamic.

Furthermore, the invention is advantageous in connection with mobile communication stations that can identify themselves to both a circuit-switched traffic service and packet-switched traffic service at the same time, but which stations do not support both kinds of traffic simultaneously. If the station is involved in circuit switched traffic, it can still receive a message via the message service, whereby the application in the mobile communication station can activate a packet data service, which activation includes that a PDP address is allocated to the station. Thus, the station can be initiated from the network server to switch from circuit-switched traffic to packet-switched traffic, whereby the network server can push packet data to the station. Examples of such stations are class B stations in a GSM network implementing GPRS.

The invention is also advantageous in connection with mobile communication stations that can only identify themselves to one type of service at a time, and only support traffic of the service to which it is identified, i.e. they are either identified to the circuit-switched traffic service or the packet-switched traffic service. As described above, the station can receive a message while involved in circuit-switched traffic. The application can then identify itself to the packet-switched traffic service instead and activate a packet data service that involves allocating a PDP address to the station. Thus, the network server can initiate a switch of traffic type and can push packet data to the station. Examples of such stations are class C stations in a GSM network implementing GPRS.

Another advantage with the invention is that it provides an external network server with the ability to immediately transfer packet data to a mobile communication station. It does not have to wait until the station happens to have an active packet data service and an allocated PDP address, since the activation of such a service and the allocation of a PDP address is initiated by the message sent to the station from the server. Moreover, there will be less risk that packets sent from the server are lost due to that the radio network does facilitate store and forward of data packets.

Another advantage is that as a user of the mobile communication station will have the option of accepting or aborting the packet data transfer from the network server about to be initiated. By responding to the message presented to the user and describing the service, the user will be able to control the billing of his subscription. This control of billing is applicable in a radio network system providing a packet data service in which the subscriber is billed for the number of sent, as well as received, data packets from/to the mobile communication station. Thus, if a user would not have the option of denying packet data from network servers, he would have to pay for all packet data any server would send to him by force, even if it concerns information of no interest for the user.

Furthermore, with the response to the network server, which is based on the ciphering key previously transmitted by the server, the server is able to verify that the packet data will be transferred to the right user.

It is to be understood that what is meant by the expression mobile communication station, or station for short, is either a stand-alone RF (Radio Frequency) transceiver having processing capabilities and displaying means, or, a RF transceiver together with any kind of portable processing means, such as a portable computer, wherein the RF transceiver is arranged in communication with the portable processing means.

### Brief description of the drawings

Further features and advantages of the invention will become more readily apparent from the following detailed description of an exemplifying embodiment of the invention when taken in conjunction with the accompanying drawings, in which:
Fig. 1 schematically shows an exemplified digital radio communication network providing a packet data service;
Fig. 2 shows the interaction between the elements in the network of Fig. 1 in accordance with the embodiment of the invention;
Fig. 3 shows an exemplifying structure of the content of a message provided by a message service in accordance with the embodiment of the invention; and
Fig. 4 shows a flow chart of the operation of the mobile communication station in accordance.with the embodiment of the invention.

### Detailed description of a preferred embodiment

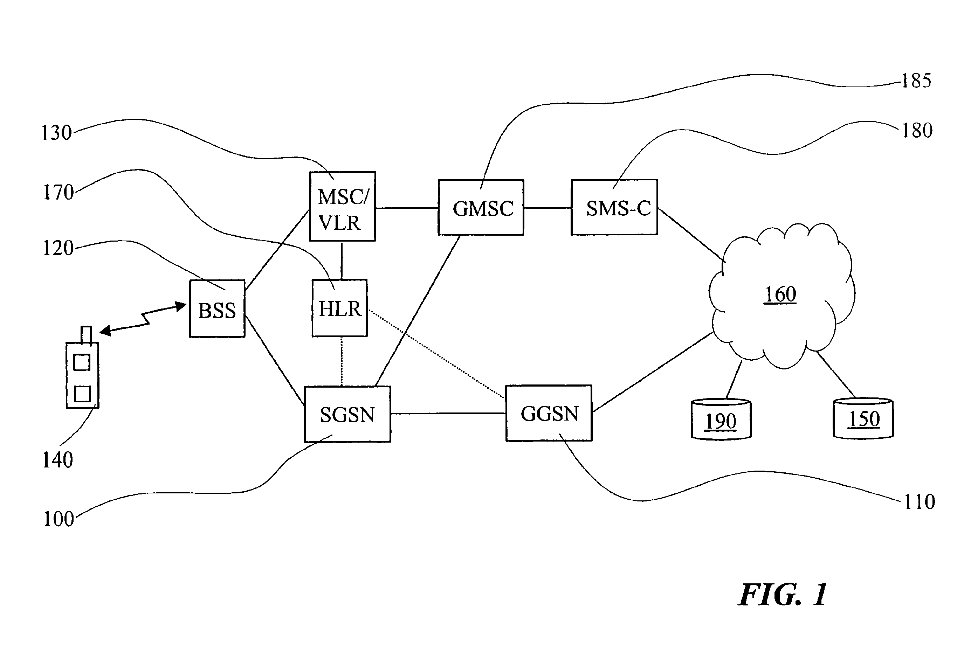

In Fig. 1 an exemplified digital radio Communication network providing a packet data service is schematically shown. The network is the Global System for Mobile Communication (GSM) network. The packet data transferring capabilities of the GSM network is provided by the General Packet Radio Service (GPRS). GPRS is a standardisation from the European Telecommunications Standard Institute (ETSI) on packet data in GSM systems.

Since the architecture, and operational aspects, of GSM are well known to persons skilled in the art, only those aspects of GSM which are of direct relevance to the present invention will be covered by this application.

For information about GPRS and GSM, reference is made to the following ETSI standardisation documents:
- EN 301 113 V6.1.1 (1998-11)(GSM 02.60 version 6.1.1 Release 1997);
- Draft ETSI EN 301 344 V6.4.0 (1999-08) (GSM 03.60 version 6.4.0 Release 1997);
- TS 101 348 V6.3.0 (1998-10) (GSM 09.61 version 6.3.0 Release 1997).

Basically, GPRS adds two new nodes to the GSM system for handling packet traffic, a Serving GPRS Support Node (SGSN) 100 and a Gateway GPRS Support Node (GGSN) 110. The SGSN 100 is the node within the GSM infrastructure that sends and receives packet data to and from the mobile station via the Base Station System (BSS) 120. The SGSN 100 performs basically the same functions for the packet-switched service as the Mobile Switching Centre/ Visitor Location Register (MSC/VLR) 130 does for the circuit-switched service. It handles user access control, security functions and mobility management. The SGSN also transfers packets between the GPRS terminals 140, i.e. mobile communication stations, and the GGSN 110. Furthermore, it handles PDP contexts for connections with any server 150 in any external packet data network 160. The GGSN 110, which is connected to the SGSN 100, is the gateway of the GPRS system to external packet data networks 160 and routes packets between the SGSN 100 and the external network 160.

In order for the GSM/GPRS system to be able to handle terminals that can be attached to both a packet-switched service and a circuit-switched service at the same time in an efficient way, it is preferred that the SGSN 100 is able to communicate with the MSC/VLR 130. Furthermore, the SGSN 100 must be connected to the Home Location Register (HLR) 170 if the functionality of the HLR is to be used for the GPRS service. Indicated in Fig. 1 are also a Short Message Service Centre (SMS-C) 180 and a Gateway Mobile Switching Centre (GMSC) 185, which contain functionality for transferring short messages, i.e. SMS messages, to the mobile communication station 140.

In order for a GPRS subscriber to be able to connect himself to an external packet data network, the procedure GPRS attach needs to be executed. By means of the GPRS attach procedure, the mobile station identifies itself to the radio network. The station 140 sends a request to be GPRS attached to the SGSN 100. If this SGSN 100 is a different SGSN from when the station last was detached, as a consequence of that the station has been moving around between the last detach and the new attach, a location update procedure is executed in order for the radio network system to know the new position of the station. The mobile station, i.e. GPRS subscriber, is authenticated by the HLR 170 and subscriber data from the HLR 170 is inserted into the SGSN 100.

For a GPRS subscriber to be able to receive packet data, a GPRS Packet Data Protocol context needs to be activated. The PDP context describes the characteristics of the connection to an external network. The mobile station 140 activates a packet data service by sending a request for context activation to the SGSN 100. The SGSN 100 validates the request based on subscription information received from the HLR during GPRS attach. The relevant GGSN 110 assigns a dynamic IP address to the mobile station 140. The dynamic IP address is either selected from a set of IP addresses allocated to the radio network, or, it is received from a Remote Authentication Dial-In User Service (RADIUS) server 190 communicating with the GGSN 110. It is possible to use several other services for receiving a dynamic IP address, for example from a service utilising the Dynamic Host Configuration Protocol (DHCP). The RADIUS server 190 could, for example, be a server in a corporate network or a server of an Internet Service Provider, wherein the first is used to provide the user with access to a corporate packet data network and the latter to the Internet. Thus, either the GGSN 110 acts as an internal repository for IP address within the radio network, or the RADIUS server acts as an external repository connected to the radio network.

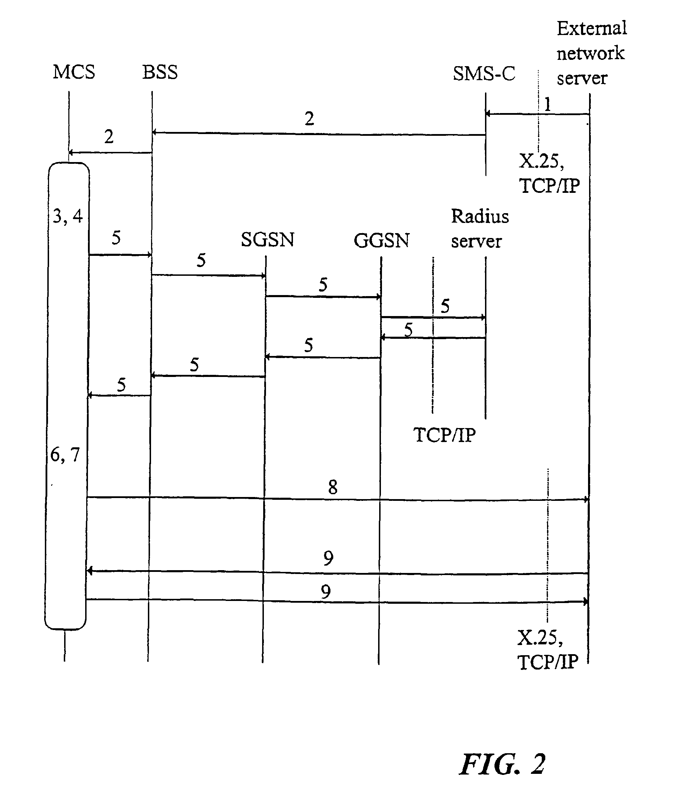

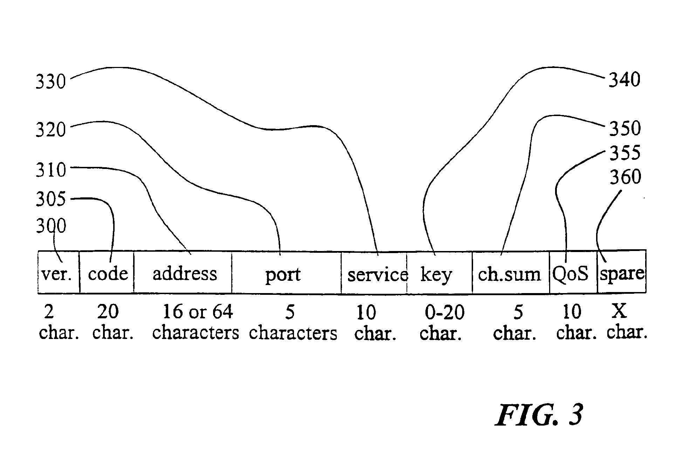

Fig. 2 shows the interaction between the elements in the network of Fig. 1 in accordance with the embodiment of the invention. With reference to the signalling flow shown in Fig. 2, the process involving the elements of Fig. 1 is as follows:
1. An external network server 150 connected to the Internet 160 wants to send, i.e. push, packet data to a GPRS subscriber 140 over a TCP/IP connection. The network server 150 connects to the Short Message Service Centre, SMS-C 180, and initiates the sending of an SMS short message to a GPRS-subscriber 140 having a particular Mobile Station Integrated Services Digital Network, MSISDN number. The SMS message includes, inter alia, an activation code and the network server's IP-address and the network server's port number used to set-up a TCP/IP-based connection between the mobile communication station (MCS) 140 and the network server 150. An example of the complete content of the SMS message will be described with reference to Fig. 3.
2.The SMS-C 180 then sends the SMS message to the GPRS-subscriber 140 through either the GSM network or the GPRS network, i.e. through the GMSC 185 and the BSS 120 via either the MSC 130 or the SGSN 100. From the BSS 120 to the mobile station 140, the SMS message is then either transferred over a GSM signalling channel or on a GPRS traffic channel. The signalling between the SMS-C 180 and the BSS 120 and the transfer of the SMS message from the BSS 120 to the MCS 140 over the GPRS or GSM radio interface is all in accordance with the state of the art.
3.The mobile communication station has an application that is started, or, which is already running, when the SMS message is received by the mobile station. The application examines the activation code in the received SMS message. If the code corresponds to a predefined code which is accepted by the application, the application processing proceeds, otherwise the application processing is stopped. Thus, if no activation code is found, the SMS message is treated in the usual way, which is outside the scope of the present invention.
4.If the activation code was accepted by the application, the application processing continues to the GPRS connection phase. This phase starts with an examination of a service indication field in the received SMS message. A text is displayed on a display of the mobile station describing which type of service that will be started. The text either is pre-stored in the mobile station and associated with a particular content of the service indication field, or, the text is extracted from another part of the received SMS message. In response to the displayed text, the user accepts or denies the offered service, causing the GPRS connection phase to be continued or aborted.
   According to the invention, if the service offered is accepted, the application identifies the mobile station for the packet data service part of the system, if it is not already identified. In the embodiment, this corresponds to checking whether the GPRS subscriber is GPRS attached or not. If the mobile station is not attached, the application performs a GPRS attach. The GPRS attach is preferably performed in accordance with standard procedure, see for example Draft ETSI EN 301 344 V6.4.0 (1999-08), chapter 6.2.
5.The application checks if the mobile station 140 has a valid IP-address ( i.e. if it has a working TCP/IP connection). If not, the application requests the digital radio communication network to activate a packet data service to be used by the mobile communication station 140, i.e., in this embodiment, it initiates the performance of a GPRS PDP Context Activation. The application then receives a dynamically allocated IP-address from the radio network, or, as illustrated in the diagram of Fig. 2, from a Radius server 190 via the radio network. The GPRS PDP Context Activation and the transfer of a dynamic IP-address are preferably performed in accordance with standard procedure, see for example TS 101 348 V6.3.0 (1998-10), chapter 11.2.1.2. However, the received packet data network address could be an address of any other packet data protocol, such as an X.25 address.
6.The application calculates a response to the ciphering key received in the SMS message.
7. The application then finds out the GPRS-user's 140 MSISDN number and prepares a reply back to the external network server 150 that initiated the original SMS message. The message contains the reply to the ciphering key and the GPRS-user's MSISDN number.
8. The application in the mobile station 140 then sets up a TCP/IP connection towards the IP-address and the port number received in the SMS message and designating the external network server 150. It then sends over the reply message in order for the external network server 150 to verify that the correct GPRS user 140 answered the SMS message.
9. The network server 150 is then able to send packet data to the GPRS-user 140 using the TCP/IP connection set up by the application in the GPRS-user's mobile communication station 140.

In Fig. 3 an exemplifying structure of the content of a message provided by the message service, in accordance with the invention, is shown.

The message content is divided into a number of information fields. Field 300 includes the version of the SMS message layout used, i.e. a particular version indicates to the application a certain predefined number of fields, each of which has a predefined length. Field 300 includes a GPRS activation code which distinguishes the message from other kind of SMS messages. Field 310 includes an IP-address, IPv4 or IPv6, to the network server from which the message was sent. Field 320 includes a port number of the network server to be used when establishing a TCP/IP connection with the network server. Field 330 is a service indication field. Based on the content of this field 330, a message is presented to the GPRS user. Field 340 includes a ciphering key, which is used by the application to calculate a response to the SMS message. Field 350 includes an ordinary checksum. Field 355 indicates what quality of service the network server wishes that the mobile communication station requests from the GSM network when using the packet data service. Finally, field 360 is made up of spare characters, which number is dependant on the number of characters used by the previous fields and, thus, on the particular message layout version. These spare characters are, for example, used for storing a text message referred to by the service indication field 330. The number of characters in each field of the message in Fig. 3 is a mere exemplification and may, as indicated above, vary with the SMS message layout version used.

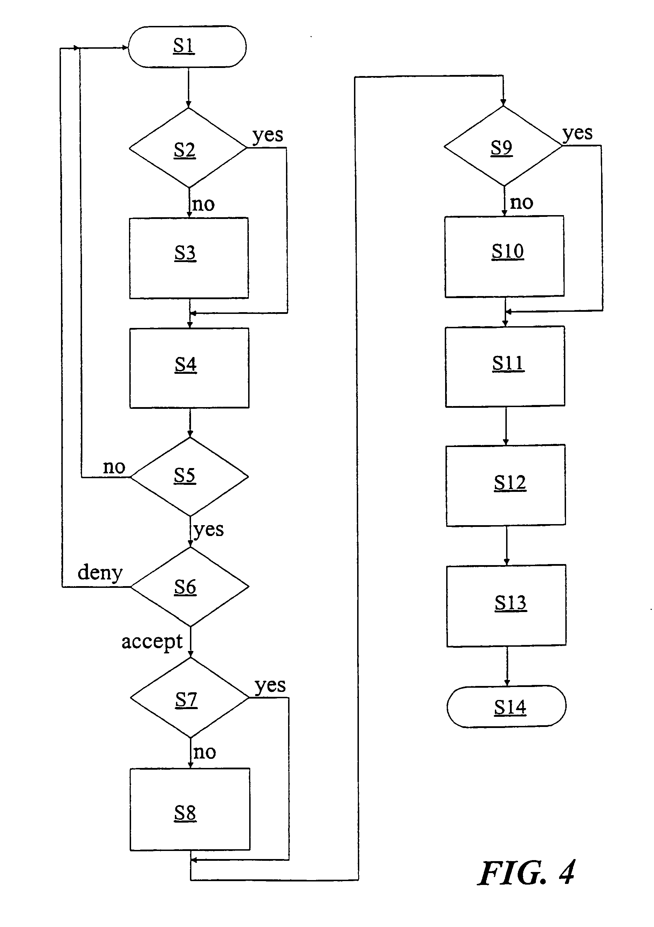

Fig. 4 a flow chart of the operation of the mobile communication station and its application is shown.

In step S1, the processing within the mobile communication station is started by an incoming SMS message. In step S2 it is then checked if the application in accordance with the invention has been started or not. If the application is not running the processing continues to step S3, in which step the application is started, and then to step S4. If the application is already running, the processing continues with step S4 directly after step S2.

In step S4 the application extracts an activation code, i.e. the content of field 300, from the SMS message The application then examines the activation code in step S5. If the activation code is a code that is accepted by the application, the processing of the application continues to step S6, otherwise the running of the application is stopped and the processing returns to step S1. In step S6 the application extracts the remaining information stored in the different fields of the SMS message, which fields and their contents have been described with reference to Fig. 3, and examines a service indicator included in the service indication field 330. In step S6 the application also presents a message, for example, in the form of a text displayed on a display of the mobile communication station, for the user of the mobile station. The message indicates the service about to be initiated from the network server that initiated the SMS message. The application then waits for a response to the message from the user. If the user accepts the service, the application processing continues to step S7, otherwise the running of the application is stopped and the processing returns to step S1.

In step S7 the application checks whether or not the mobile station is GPRS attached. This check is performed in a way which is conventional for a GPRS mobile station. If the mobile station is not GPRS attached, the application initiates a GPRS attach in conventional manner in step S8, after which the processing continues to step S9. If the mobile station is already GPRS attached, the application processing continues directly to step S9. In step S9 the application checks whether or not the mobile station has a TCP/IP connection that can be utilised, i.e. if it has a valid IP address or not. If the mobile station does not have a valid IP address, the application in step 10 initiates a GPRS PDP Context Activation, i.e. activates a packet data service, in accordance with what has been described above, after which activation the application processing continues to step S11. If the mobile station already has a valid IP address, the application processing continues directly from step S9 to step S11.

In step S11 the application calculates a response to the ciphering key extracted from field 340 of the SMS message. The calculation is performed in accordance with a predefined algorithm. The application then in step S12 recalls the GPRS users identification number, i.e. the MSISDN number, from within the mobile station. In step S13 the application establishes a packet data protocol session with the external network server using the server's IP address extracted from field 310 and the server's port number extracted from field 320 in the SMS message. The application then in step S13 sends a message to the external network server in reply to the received SMS message. The message sent to the server includes the response calculated in step S11 and the MSISDN number recalled in step S12. The message is used by the network server to verify the GPRS user. The processing in the mobile station for initiating the transfer of packet data from the external network server to the mobile station ends in step S14.

After the above processing steps of Fig. 4 have been performed in the mobile station, the network server can use the established TCP/IP connection to transfer packet data to the mobile station.

The means included by the application according to the invention for performing the tasks described in the exemplifying embodiment, and elsewhere in this application, are software code modules executed by a microprocessor arranged within the mobile communication station, which means are supported and/or interact with additional hardware within the mobile communication station in accordance with what is appropriate and obvious to a person skilled in the art. The implementation of these means, or software code modules, are obvious for a person skilled in the art of programming and being familiar with the GSM system in general, and the GPRS system in particular.

Although the invention has been described with reference to a specific exemplifying embodiment based on a GSM system providing a GPRS service, the described embodiment is not intended to limit the scope of the invention, as defined by the appended claims. Instead, the present invention is well suited for any digital radio communication network that provides a packet data service to its connected wireless users. Also, many different alterations, modifications and the like, within the scope of the appended claims, will become apparent for those skilled in the art.

## Claims

1. A method for initiating immediate transfer of packet data from a network server (150) to a mobile communication station (140) over a digital radio communication network, in which method a message is sent to the mobile communication station (140) using a message service provided by the digital radio communication network, **characterized in that**
said message includes a first packet data network address (310) of said network server (150), and that the method includes the steps of:
extracting the first packet data network address (310) from said message by means of an application executing on the mobile communication station (140); and
establishing, from the application of the mobile communication station (140) having a second packet data network address, a packet data protocol session with said network server (150) using said first packet data network address (310),
whereby the network server (150) is able to transfer packet data to the mobile communication station (140) and the application using said packet data protocol session.

2. The method claimed in claim 1, wherein the digital radio communication network is a Global System for Mobile Communication, GSM, network providing a General Packet Radio Service, GPRS.

3. The method claimed in claim 1 or 2, wherein the message service is a Short Message Service (180).

4. The method claimed in any one of claims 1 - 3,
wherein the first packet data network address (310) is an Internet Protocol or an X.25 protocol address.

5. The method claimed in any one of claims 1 - 4,
wherein said application performs the step of identifying the mobile communication station (140) to the packet data service part of the digital radio communication network, if the mobile communication station is not identified to that service.

6. The method as claimed in claim 5, wherein the identifying step includes performing a GPRS attach toward a GSM network if the mobile communication station is not attached.

7. The method claimed in any one of claims 1 - 6, including the steps of:
sending a request from the application to the digital radio communication network to activate a packet data service for use by the mobile communication station (140), if the mobile communication station does not have such a packet data service activated;
allocating, in a node (110;190) within, or connected to, said digital radio communication network, in connection with activating the requested packet data service, a temporary packet data network address to the mobile communication station (140); and
transferring the temporary network address to the mobile communication station (140) and the application, which temporary network address constitutes said second packet data network address.

8. The method as claimed in claim 7, wherein the step of sending a request includes sending a request for a GPRS Packet Data Protocol, PDP, Context activation.

9. The method as claimed in claim 7 or 8, wherein the temporary packet data network address is an Internet Protocol or an X.25 protocol address.

10. The method claimed in any one of claims 5 - 9,
wherein said application performs the steps of:
examining an activation code (305) present in said message received by the mobile communication station; and
performing said step of identifying the mobile communication station (140) to the radio communication network only if an appropriate activation code (305) was found in the message during the examining step.

11. The method claimed in any one of claims 5 - 10, wherein said application performs the steps of:
examining a service indication field (330) in said message received by the mobile communication station; and
presenting a message to a user of the mobile communication station (140), the message being based on the content of the service indication field (330) and describing the service that will be initiated.

12. The method as claimed in claim 11, wherein the step of presenting a message to a user includes presenting a text message on a display or a voice message over a loudspeaker.

13. The method claimed in claim 11 or 12, wherein said application further performs the steps of:
waiting for a reply to the presented message from the user of the mobile communication station; and
continuing with, or aborting, said step of identifying the mobile communication station (140) to the digital radio communication network in dependence on the reply to the presented message.

14. The method as claimed in claim 13, wherein the step of waiting for a reply includes waiting for an accept or a deny reply.

15. The method claimed in any one of claims 1 - 14, wherein said application performs the steps of:
extracting a ciphering key (340) from said message received by the mobile communication station; and
sending a message to the network server (150), which message includes a calculated response to the extracted ciphering key and an identification number associated with the mobile communication station (140), whereby the network server is able to verify the identity of the mobile communication station user.

16. The method as claimed in claim 15, wherein said identification number associated with the mobile communication station (140) is a Mobile Station Integrated Services Digital Network, MSISDN, number.

17. An arrangement at a mobile communication station (140) for facilitating immediate transfer of packet data from a network server (150) to the mobile communication station (140) over a digital radio communication network, which arrangement includes first receiving means for receiving a message from a message service provided by the digital radio communication network, **characte rized in that**
said message includes a first packet data network address (310) of said network server (150), and that the arrangement further includes:
extracting means for extracting the first packet data network address (310) from said message; and
packet data protocol means for establishing a packet data protocol session with said network server (150) using said first packet data network address (310), and for receiving packet data from the network server (150) addressed to a second packet data network address, which second packet data network address is allocated to the mobile communication station (140).

18. The arrangement claimed in claim 17, wherein the digital radio communication network is a Global System for Mobile Communication, GSM, network providing a General Packet Radio Service, GPRS.

19. The arrangement claimed in claim 17 or 18,
wherein the message service is a Short Message Service (180).

20. The arrangement claimed in any one of claims 17 - 19, wherein the first packet data network address (310) is an Internet Protocol or an X.25 protocol address.

21. The arrangement claimed in any one of claims 17 - 20, including means for identifying the mobile communication station (140) to the packet data service part of the digital radio communication network if the mobile communication station is not identified to that service.

22. The arrangement claimed in claim 21, wherein the means for identifying is adapted to perform a GPRS attach towards a GSM network if the mobile communication station is not attached.

23. The arrangement claimed in any one of claims 17 - 22, including:
transmitting means for sending a request to the digital radio communication network to activate a packet data service for use by the mobile communication station (140), if the mobile communication station does not have such a packet data service activated; and
second receiving means for receiving a temporary packet data network address from the digital radio communication network in response to said request, which received temporary packet data network address constitutes said second packet data network address;

24. The arrangement claimed in claim 23, wherein the transmitting means is adapted to send a request for a GPRS Packet Data Protocol, PDP, Context activation.

25. The arrangement claimed in claim 23 or 24,
wherein the temporary packet data network address is an Internet Protocol or an X.25 protocol address.

26. A program storage device containing a sequence of instructions for a microprocessor to cause a mobile communication station (140) to receive a message from a message service provided by a digital radio communication network, **characterized in that** said message includes a first packet data network address (310) of a network server (150), and that the sequence of instructions further is adapted to:
causing the mobile communication station (140) to extract the first packet data network address (310) from said message;
causing the mobile communication station (140), to which a second packet data network address is allocated, to establish a packet data protocol session with said network server (150) using said first packet data network address (310); and
causing the mobile communication station (140) to receive packet data, addressed to the second packet data network address, from the network server (150) via said packet data protocol session.

27. The program storage device claimed in claim 26, wherein the message service is a Short Message Service (180).

28. The program storage device claimed in claim 26 or 27, wherein the digital radio communication network is a Global System for Mobile Communication, GSM, network providing a General Packet Radio Service, GPRS.

29. The program storage device claimed in any one of claims 26 - 28, wherein the first packet data network address (310) is an Internet Protocol or an X.25 protocol address.

30. The program storage device claimed in any one of claims 26 - 29, performing the step of causing the mobile communication station (140) to identify itself to the packet data service part of the digital radio communication network, if the mobile communication station is not identified to that service.

31. The program storage device claimed in claim 30, wherein the step of causing the mobile communication station (140) to identify itself includes causing the mobile communication station (140) to perform a GPRS attach towards a GSM network if the mobile communication station is not attached.

32. The program storage device claimed in any one of claims 26 - 31, performing the steps of:
causing the mobile communication station (140) to send a request to the digital radio communication network to activate a packet data service for use by the mobile communication station, if the mobile communication station does not have such a packet data service activated; and
causing the mobile communication station (140) to receive a temporary packet data network address from the digital radio communication network in response to said request, which received temporary packet data network address constitutes said second packet data network address.

33. The program storage device claimed in claim 32, wherein the step of causing the mobile communication station (140) to send a request includes causing the mobile communication station (140) to send a request for a GPRS Packet Data Protocol, PDP, Context activation.

34. The program storage device claimed in claim 32 or 33, wherein the temporary packet data network address is an Internet Protocol or an X.25 protocol address.

35. A message data format used for initiating the transfer of packet data from a network server (150) to a mobile communication station (140) without interaction with a user of the mobile communication station (140), the mobile communication station being the addressee of a message having said message data format, the message data format including a field with an activation code (305) which is to be decoded by an application program in said mobile communication station, **characterized in that** said activation code (305) indicates to the application program that said message was initiated by a network server (150) wishing to transfer packet data to the mobile communication station (140), wherein further fields of the message data format are decoded by said application program and thereby facilitating the reception of packet data from the network server (150), and that the message format further includes:
a field with a packet data network address (310) which is to be decoded by said application program, said packet data network address indicating to the application program which network server (150) it should establish a packet data protocol session with.

36. The message data format claimed in claim 35, including a field with a service indication (330) which is to be decoded by an application program, said service indication forming the basis for a message presented to a user relating to what service that is about to be initiated.

37. The message data format claimed in claim 35 or 36, including a field with a ciphering key (340) which is to be decoded by an application program, said ciphering key being used by the application program to calculate a response, to said message having said message data format, for transmission to said network server (150).

38. The message data format claimed in claim 37,
wherein the message data format includes a sequence of fields with the following information:
a version (300) of the SMS message layout used;
a GPRS activation code (305);
an Internet Protocol address (310) of the network server;
a port number (320) of the network server;
a service indication (330);
a ciphering key (340);
a checksum (350);
a quality of service (355); and
spare characters (360).

## Patentansprüche

1. Verfahren zum Initiieren einer sofortigen Übertragung von Paketdaten von einem Netzwerkserver (150) über ein digitales Funkkommunikationsnetz zu einer Mobilkommunikationsstation (140), wobei bei diesem Verfahren eine Mitteilung unter Nutzung eines durch das digitale Funkkommunikationsnetz bereitgestellten Mitteilungsdienstes an die Mobilkommunikationsstation (140) gesendet wird, **dadurch gekennzeichnet, dass**
die Mitteilung eine erste Paketdatennetzwerkadresse (310) des Netzwerkservers (150) enthält, und dass das Verfahren folgende Schritte enthält:
Extrahieren der ersten Paketdatennetzwerkadresse (310) aus der Mitteilung mittels einer Anwendung, die in der Mobilkommunikationsstation (140) ausgeführt wird; und
Herstellen, aus der Anwendung der Mobilkommunikationsstation (140) mit einer zweiten Paketdatennetzwerkadresse heraus, einer Paketdatenprotokollsitzung mit dem Netzwerkserver (150) unter Verwendung der ersten Paketdatennetzwerkadresse (310),
wobei der Netzwerkserver (150) in der Lage ist, Paketdaten zu der Mobilkommunikationsstation (140) und der Anwendung mittels der Paketdatenprotokollsitzung zu übertragen.

2. Verfahren nach Anspruch 1, wobei das digitale Funkkommunikationsnetz ein Global System for Mobile Communication (GSM)-Netzwerk ist, das einen General Packet Radio Service (GPRS) erbringt.

3. Verfahren nach Anspruch 1 oder 2, wobei der Mitteilungsdienst ein Kurzmitteilungsdienst (180) ist.

4. Verfahren nach einem der Ansprüche 1-3, wobei die erste Paketdatennetzwerkadresse (310) eine Internet-Protokoll- oder eine X.25-Protokolladresse ist.

5. Verfahren nach einem der Ansprüche 1-4, wobei die Anwendung den Schritt des Identifizierens der Mobilkommunikationsstation (140) gegenüber dem Paketdatendienstteil des digitalen Funkkommunikationsnetzes ausführt, wenn die Mobilkommunikationsstation nicht gegenüber diesem Dienst identifiziert ist.

6. Verfahren nach Anspruch 5, wobei der Schritt des Identifizierens das Durchführen einer GPRS-Anmeldung bei dem GSM-Netzwerk enthält, wenn die Mobilkommunikationsstation nicht angemeldet ist.

7. Verfahren nach einem der Ansprüche 1-6, das folgende Schritte enthält:
Senden einer Anforderung aus der Anwendung zu dem digitalen Funkkommunikationsnetz, einen Paketdatendienst zur Verwendung durch die Mobilkommunikationsstation (140) zu aktivieren, wenn die Mobilkommunikationsstation keinen solchen Paketdatendienst aktiviert hat;
Zuweisen, in einem Knoten (110;190), der sich in dem digitalen Funkkommunikationsnetz befindet oder mit ihm verbunden ist, in Verbindung mit dem Aktivieren des angeforderten Paketdatendienstes, einer temporären Paketdatennetzwerkadresse zu der Mobilkommunikationsstation (140); und
Übertragen der temporären Netzwerkadresse zu der Mobilkommunikationsstation (140) und der Anwendung, wobei diese temporäre Netzwerkadresse die zweite Paketdatennetzwerkadresse darstellt.

8. Verfahren nach Anspruch 7, wobei der Schritt des Sendens einer Anforderung das Senden einer Anforderung einer GPRS-Paketdatenprotokoll (PDP)-Kontextaktivierung enthält.

9. Verfahren nach Anspruch 7 oder 8, wobei die temporäre Paketdatennetzwerkadresse eine Internet-Protokoll- oder eine X.25-Protokolladresse ist.

10. Verfahren nach einem der Ansprüche 5-9, wobei die Anwendung folgende Schritte ausführt:
Untersuchen eines Aktivierungscodes (305), der in der Mitteilung enthalten ist, die durch die Mobilkommunikationsstation empfangen wird; und
Ausführen des Schrittes des Identifizierens der Mobilkommunikationsstation (140) gegenüber dem Funkkommunikationsnetz nur dann, wenn während des Untersuchungsschrittes ein entsprechender Aktivierungscode (305) in der Mitteilung gefunden wird.

11. Verfahren nach einem der Ansprüche 5 - 10, wobei die Anwendung folgende Schritte ausführt:
Untersuchen eines Dienstangabefeldes (330) in der Mitteilung, die durch die Mobilkommunikationsstation empfangen wurde; und Ausgeben einer Mitteilung an einen Nutzer der Mobilkommunikationsstation (140), wobei die Mitteilung auf dem Inhalt des Dienstangabefeldes (330) basiert, und Beschreiben des Dienstes, der initiiert werden wird.

12. Verfahren nach Anspruch 11, wobei der Schritt des Ausgebens einer Mitteilung an einen Nutzer das Anzeigen einer Textmitteilung auf einem Anzeigefeld oder einer Sprachmitteilung über einen Lautsprecher enthält.

13. Verfahren nach Anspruch 11 oder 12, wobei die Anwendung des Weiteren folgende Schritte ausführt:
Warten auf eine Antwort auf die ausgegebene Mitteilung von dem Nutzer der Mobilkommunikationsstation; und
Fortsetzen oder Abbrechen des Schrittes des Identifizierens der Mobilkommunikationsstation (140) gegenüber dem digitalen Funkkommunikationsnetz in Abhängigkeit von der Antwort auf die ausgegebene Mitteilung.

14. Verfahren nach Anspruch 13, wobei der Schritt des Wartens auf eine Antwort das Warten auf eine akzeptierende oder eine ablehnende Antwort enthält.

15. Verfahren nach einem der Ansprüche 1-14, wobei die Anwendung folgende Schritte ausführt:
Extrahieren eines Verschlüsselungsschlüssels (340) aus der Mitteilung, die durch die Mobilkommunikationsstation empfangen wurde; und
Senden einer Mitteilung an den Netzwerkserver (150), wobei die Mitteilung eine berechnete Antwort auf den extrahierten Verschlüsselungsschlüssel und eine Identifizierungsnummer, die der Mobilkommunikationsstation (140) zugeordnet ist, enthält, wobei der Netzwerkserver in der Lage ist, die Identität des Nutzers der Mobilkommunikationsstation zu verifizieren.

16. Verfahren nach Anspruch 15, wobei die der Mobilkommunikationsstation (140) zugeordnete Identifizierungsnummer eine Mobile Station Integrated Services Digital Network (MSISDN)-Nummer ist.

17. Anordnung in einer Mobilkommunikationsstation (140) zum Ermöglichen einer sofortigen Übertragung von Paketdaten von einem Netzwerkserver (150) über ein digitales Funkkommunikationsnetz zu der Mobilkommunikationsstation (140), wobei die Anordnung ein erstes Empfangsmittel zum Empfangen einer Mitteilung von einem durch das digitale Funkkommunikationsnetz bereitgestellten Mitteilungsdienst enthält, **dadurch gekennzeichnet, dass**
die Mitteilung eine erste Paketdatennetzwerkadresse (310) des Netzwerkservers (150) enthält, und dass die Anordnung des Weiteren Folgendes enthält:
ein Extraktionsmittel zum Extrahieren der ersten Paketdatennetzwerkadresse (310) aus der Mitteilung; und
ein Paketdatenprotokollmittel zum Herstellen einer Paketdatenprotokollsitzung mit dem Netzwerkserver (150) unter Verwendung der ersten Paketdatennetzwerkadresse (310) und zum Empfangen von Paketdaten von dem Netzwerkserver (150), die an eine zweite Paketdatennetzwerkadresse adressiert sind, wobei die zweite Paketdatennetzwerkadresse der Mobilkommunikationsstation (140) zugeordnet ist.

18. Anordnung nach Anspruch 17, wobei das digitale Funkkommunikationsnetz ein Global System for Mobile Communication (GSM)-Netzwerk ist, das einen General Packet Radio Service (GPRS) erbringt.

19. Anordnung nach Anspruch 17 oder 18, wobei der Mitteilungsdienst ein Kurzmitteilungsdienst (180) ist.

20. Anordnung nach einem der Ansprüche 17 - 19, wobei die erste Paketdatennetzwerkadresse (310) eine Internet-Protokoll- oder eine X.25-Protokolladresse ist.

21. Anordnung nach einem der Ansprüche 17 - 20, die ein Mittel zum Identifizieren der Mobilkommunikationsstation (140) gegenüber dem Paketdatendienstteil des digitalen Funkkommunikationsnetzes, wenn die Mobilkommunikationsstation nicht gegenüber diesem Dienst identifiziert ist, enthält.

22. Anordnung nach Anspruch 21, wobei das Mittel zum Identifizieren dafür ausgelegt ist, eine GPRS-Anmeldung bei dem GSM-Netzwerk aufzuführen, wenn die Mobilkommunikationsstation nicht angemeldet ist.

23. Anordnung nach einem der Ansprüche 17 - 22, die Folgendes enthält:
ein Sendemittel zum Senden einer Anforderung an das digitale Funkkommunikationsnetz, einen Paketdatendienst zur Verwendung durch die Mobilkommunikationsstation (140) zu aktivieren, wenn die Mobilkommunikationsstation keinen solchen Paketdatendienst aktiviert hat; und
ein zweites Empfangsmittel zum Empfangen einer temporären Paketdatennetzwerkadresse aus dem digitalen Funkkommunikationsnetz als Antwort auf die Anforderung, wobei die empfangene temporäre Paketdatennetzwerkadresse die zweite Paketdatennetzwerkadresse darstellt.

24. Anordnung nach Anspruch 23, wobei das Sendemittel dafür geeignet ist, eine Anforderung einer GPRS-Paketdatenprotokoll (PDP)-Kontextaktivierung zu senden.

25. Anordnung nach Anspruch 23 oder 24, wobei die temporäre Paketdatennetzwerkadresse eine Internet-Protokoll- oder eine X.25-Protokolladresse ist.

26. Programmspeichervorrichtung, die eine Abfolge von Instruktionen für einen Mikroprozessor enthält, um eine Mobilkommunikationsstation (140) zu veranlassen, eine Mitteilung von einem durch ein digitales Funkkommunikationsnetz bereitgestellten Mitteilungsdienst zu empfangen, **dadurch gekennzeichnet, dass** die Mitteilung eine erste Paketdatennetzwerkadresse (310) eines Netzwerkservers (150) enthält und dass die Abfolge von Instruktionen des Weiteren dafür ausgelegt ist:
die Mobilkommunikationsstation (140) zu veranlassen, die erste Paketdatennetzwerkadresse (310) aus der Mitteilung zu extrahieren;
die Mobilkommunikationsstation (140), der eine zweite Paketdatennetzwerkadresse zugeordnet ist, zu veranlassen, eine Paketdatenprotokollsitzung mit dem Netzwerkserver (150) unter Verwendung der ersten Paketdatennetzwerkadresse (310) herzustellen; und
die Mobilkommunikationsstation (140) zu veranlassen, Paketdaten, die an die zweite Paketdatennetzwerkadresse adressiert sind, von dem Netzwerkserver (150) über die Paketdatenprotokollsitzung zu empfangen.

27. Programmspeichervorrichtung nach Anspruch 26, wobei der Mitteilungsdienst ein Kurzmitteilungsdienst (180) ist.

28. Programmspeichervorrichtung nach Anspruch 26 oder 27, wobei das digitale Funkkommunikationsnetz ein Global System for Mobile Communication (GSM)-Netzwerk ist, das einen General Packet Radio Dienst (GPRS) erbringt.

29. Programmspeichervorrichtung nach einem der Ansprüche 26 - 28, wobei die erste Paketdatennetzwerkadresse (310) eine Internet-Protokoll- oder eine X.25-Protokolladresse ist.

30. Programmspeichervorrichtung nach einem der Ansprüche 26 - 29, die den Schritt des Veranlassens der Mobilkommunikationsstation (140), sich gegenüber dem Paketdatendienstteil des digitalen Funkkommunikationsnetzes zu identifizieren, ausführt, wenn die Mobilkommunikationsstation nicht gegenüber diesem Dienst identifiziert ist.

31. Programmspeichervorrichtung nach Anspruch 30, wobei der Schritt des Veranlassens der Mobilkommunikationsstation (140), sich zu identifizieren, den Schritt enthält, die Mobilkommunikationsstation (140) zu veranlassen, eine GPRS-Anmeldung bei dem GSM-Netzwerk aufzuführen, wenn die Mobilkommunikationsstation nicht angemeldet ist.

32. Programmspeichervorrichtung nach einem der Ansprüche 26 - 31, die folgende Schritte ausführt:
Veranlassen der Mobilkommunikationsstation (140), eine Anforderung an das digitale Funkkommunikationsnetz zu senden, einen Paketdatendienst zur Verwendung durch die Mobilkommunikationsstation zu aktivieren, wenn die Mobilkommunikationsstation keinen solchen Paketdatendienst aktiviert hat; und
Veranlassen der Mobilkommunikationsstation (140), eine temporäre Paketdatennetzwerkadresse aus dem digitalen Funkkommunikationsnetz in Antwort auf die Anforderung zu empfangen, wobei die empfangene temporäre Paketdatennetzwerkadresse die zweite Paketdatennetzwerkadresse darstellt.

33. Programmspeichervorrichtung nach Anspruch 32, wobei der Schritt des Veranlassens der Mobilkommunikationsstation (140), eine Anforderung zu senden, den Schritt enthält, die Mobilkommunikationsstation (140) zu veranlassen, eine Anforderung einer GPRS-Paketdatenprotokoll (PDP)-Kontextaktivierung zu senden.

34. Programmspeichervorrichtung nach Anspruch 32 oder 33, wobei die temporäre Paketdatennetzwerkadresse eine Internet-Protokoll- oder eine X.25-Protokolladresse ist.

35. Mitteilungsdatenformat zum Initiieren der Übertragung von Paketdaten von einem Netzwerkserver (150) zu einer Mobilkommunikationsstation (140) ohne Interaktion mit einem Nutzer der Mobilkommunikationsstation (140), wobei die Mobilkommunikationsstation der Adressat einer Mitteilung ist, die dieses Mitteilungsdatenformat hat, wobei das Mitteilungsdatenformat ein Feld mit einem Aktivierungscode (305) enthält, der durch ein Anwendungsprogramm in der Mobilkommunikationsstation zu decodieren ist, **dadurch gekennzeichnet, dass** der Aktivierungscode (305) dem Anwendungsprogramm anzeigt, dass die Mitteilung durch einen Netzwerkserver (150) initiiert wurde, der Paketdaten zu der Mobilkommunikationsstation (140) übertragen will, wobei weitere Felder des Mitteilungsdatenformats durch das Anwendungsprogramm decodiert werden und **dadurch** der Empfang von Paketdaten von dem Netzwerkserver (150) ermöglicht wird, und dass das Mitteilungsformat des Weiteren Folgendes enthält:
ein Feld mit einer Paketdatennetzwerkadresse (310), die durch das Anwendungsprogramm zu decodieren ist, wobei die Paketdatennetzwerkadresse dem Anwendungsprogramm anzeigt, mit welchem Netzwerkserver (150) es eine Paketdatenprotokollsitzung herstellen soll.

36. Mitteilungsdatenformat nach Anspruch 35, das ein Feld mit einer Dienstangabe (330) enthält, die durch das Anwendungsprogramm zu decodieren ist, wobei die Dienstangabe die Basis für eine an einen Nutzer ausgegebene Mitteilung bildet, die sich darauf bezieht, welcher Dienst als nächstes initiiert werden soll.

37. Mitteilungsdatenformat nach Anspruch 35 oder 36, das ein Feld mit einem Verschlüsselungsschlüssel (340) enthält, der durch das Anwendungsprogramm zu decodieren ist, wobei der Verschlüsselungsschlüssel durch das Anwendungsprogramm dafür verwendet wird, eine Antwort auf die das Mitteilungsdatenformat aufweisende Mitteilung berechnen, um sie an den Netzwerkserver (150) zu senden.

38. Mitteilungsdatenformat nach Anspruch 37, wobei das Mitteilungsdatenformat eine Abfolge von Feldern mit den folgenden Informationen enthält:
eine Version (300) des verwendeten SMS-Mitteilungslayouts;
einen GPRS-Aktivierungscode (305);
eine Internet-Protokolladresse (310) des Netzwerkservers;
eine Portnummer (320) des Netzwerkservers;
eine Dienstangabe (330);
einen Verschlüsselungsschlüssel (340);
eine Prüfsumme (350);
eine Dienstqualität (355); und
Ersatzzeichen (360).

## Revendications

1. Procédé pour amorcer un transfert immédiat de paquets de données depuis un serveur de réseau (150) vers une station de communication mobile (140) via un réseau de communication radio numérique, procédé dans lequel un message est envoyé vers la station de communication mobile (140) en utilisant un service de messagerie fourni par le réseau de communication radio numérique, **caractérisé en ce que**
ledit message inclut une première adresse de réseau de paquets de données (310) dudit serveur de réseau (150), et **en ce que** le procédé inclut les étapes consistant à:
extraire la première adresse de réseau de paquets de données (310) dudit message au moyen d'un application qui s'exécute sur la station de communication mobile (140); et
établir, depuis l'application de la station de communication mobile (140) ayant une seconde adresse de paquets de données, une session de protocole de paquets de données avec ledit serveur de réseau (150) en utilisant ladite première adresse de réseau de paquets de données (310),
dans lequel le serveur de réseau (150) est en mesure de transférer des paquets de données à la station de communication mobile (140) et à l'application en utilisant ladite session de protocole de paquets de données.

2. Procédé selon la revendication 1, dans lequel le réseau de communication radio numérique est un réseau GSM, Global System for Mobile Communication fournissant un service GPRS, General Packet Radio Service.

3. Procédé selon la revendication 1 ou 2, dans lequel le service de messagerie est un service de messages courts (180).

4. Procédé selon une quelconque des revendications 1 à 3, dans lequel la première adresse de réseau de paquets de données (310) est une adresse de protocole Internet ou de protocole X.25.

5. Procédé selon une quelconque des revendications 1 à 4, dans lequel ladite application effectue l'étape d'identification de la station de communication mobile (140) vers la partie de desserte de paquets de données du réseau de communication radio numérique, si la station de communication mobile n'est pas identifiée par rapport à ce service.

6. Procédé selon la revendication 5, dans lequel l'étape d'identification inclut d'effectuer un rattachement GPRS vers un réseau GSM si la station de communication mobile n'est pas rattachée.

7. Procédé selon une quelconque des revendications 1 à 6, incluant les étapes consistant à:
envoyer une demande depuis l'application vers le réseau de communication radio numérique pour activer un service de paquets de données à utiliser par la station de communication mobile (140), si la station de communication mobile ne comporte pas un tel service de paquets de données activé;
allouer, dans un noeud (110; 190) à l'intérieur de, ou connecté audit réseau de communication radio numérique, en liaison avec l'activation du service de paquets de données demandé, une adresse de réseau de paquet de données temporaire vers la station de communication mobile (140); et
transférer l'adresse de réseau temporaire à la station de communication mobile (140) et à l'application, laquelle adresse de réseau temporaire constituant ladite seconde adresse de réseau de paquets de données.

8. Procédé selon la revendication 7, dans lequel l'étape d'envoi d'une demande inclut d'envoyer une demande d'une activation de contexte PDP, Packet Data Protocol, GPRS.

9. Procédé selon la revendication 7 ou 8, dans lequel l'adresse de réseau de paquets de données temporaire est une adresse de protocole Internet ou de protocole X.25.

10. Procédé selon une quelconque des revendications 5 à 9, dans lequel ladite application effectue les étapes consistant à:
examiner un code d'activation (305) présent dans ledit message reçu par la station de communication mobile; et
effectuer ladite étape d'identification de la station de communication mobile (140) par rapport au réseau de communication radio seulement si un code d'activation approprié (305) a été trouvé dans le message pendant l'étape d'examen.

11. Procédé selon une quelconque des revendications 5 à 10, dans lequel ladite application effectue les étapes consistant à:
examiner un champ d'indication de service (330) dans ledit message reçu par la station de communication mobile; et
présenter un message à un utilisateur de la station de communication mobile (140), le message étant basé sur le contenu du champ d'indication de service (330) et décrivant le service qui sera amorcé.

12. Procédé selon la revendication 11, dans lequel l'étape de présentation d'un message à un utilisateur inclut de présenter un message textuel sur un écran ou un message vocal via un haut-parleur.

13. Procédé selon la revendication 11 ou 12, dans lequel ladite application effectue en outre les étapes consistant à:
attendre une réponse au message présenté provenant de l'utilisateur de la station de communication mobile; et
poursuivre ou mettre fin à ladite étape d'identification de la station de communication mobile (140) au réseau de communication radio numérique en fonction de la réponse au message présenté.

14. Procédé selon la revendication 13, dans lequel l'étape d'attente d'une réponse inclut d'attendre une réponse d'acceptation ou de refus.

15. Procédé selon une quelconque des revendications 1 à 14, dans lequel ladite application effectue les étapes consistant à:
extraire une clé de chiffrement (340) dudit message reçu par la station de communication mobile; et
envoyer un message au serveur de réseau (150), lequel message inclut une réponse calculée à la clé de chiffrement extraite et un numéro d'identification associé à la station de communication mobile (140), dans lequel le serveur de réseau est en mesure de vérifier l'identité de l'utilisateur de la station de communication mobile.

16. Procédé selon la revendication 15, dans lequel ledit numéro d'identification associé à la station de communication mobile (140) est un numéro MSISDN, Mobile Station Integrated Services Digital Network.

17. Agencement au niveau d'une station de communication mobile (140) pour faciliter un transfert immédiat de paquets de données depuis un serveur de réseau (150) vers la station de communication mobile (140) via un réseau de communication radio numérique, lequel agencement inclut un premier moyen de réception pour recevoir un message provenant d'un service de messagerie fourni par le réseau de communication radio numérique, **caractérisé en ce que**
ledit message inclut une première adresse de réseau de paquets de données (310) dudit serveur de réseau (150), et **en ce que** l'agencement inclut en outre:
un moyen d'extraction pour extraire la première adresse de réseau de paquets de données (310) dudit message; et
un moyen de protocole de paquets de données pour établir une session de protocole de paquets de données avec ledit serveur de réseau (150) en utilisant ladite première adresse de réseau de paquets de données (310), et pour recevoir des paquets de données provenant du serveur de réseau (150) adressés à une seconde adresse de réseau de paquets de données, laquelle seconde adresse de réseau de paquets de données est allouée à la station de communication mobile (140).

18. Agencement selon la revendication 17, dans lequel le réseau de communication radio numérique est un réseau GSM, Global System for Mobile Communication, fournissant un service GPRS, General Packet Radio Service.

19. Agencement selon la revendication 17 ou 18, dans lequel le service de messagerie est un service de messages courts (180).

20. Agencement selon une quelconque des revendications 17 à 19, dans lequel la première adresse de réseau de paquets de données (310) est une adresse de protocole Internet ou de protocole X.25.

21. Agencement selon une quelconque des revendications 17 à20, incluant un moyen pour identifier la station de communication mobile (140) par rapport à la partie de desserte de paquets de données du réseau de communication radio numérique si la station de communication mobile n'est pas identifiée par rapport à ce service.

22. Agencement selon la revendication 2, dans lequel le moyen d'identification est adapté afin d'effectuer un rattachement GPRS vers un réseau GSM si la station de communication mobile n'est pas rattachée.

23. Agencement selon une quelconque des revendications 17 à 22, incluant:
un moyen de transmission pour envoyer une demande au réseau de communication radio numérique pour activer un service de paquets de données à utiliser par la station de communication mobile (140), si la station de communication mobile ne comporte pas un tel service de paquets de données activé; et
un second moyen de réception pour recevoir une adresse de réseau de paquet de données temporaire provenant du réseau de communication radio numérique en réponse à ladite demande, laquelle adresse de réseau de paquet de données temporaire reçue constitue ladite seconde adresse de réseau de paquets de données ;

24. Agencement selon la revendication 23, dans lequel le moyen de transmission est adapté afin d'envoyer une demande d'une activation de contexte PDP, Packet Data Protocol, GPRS.

25. Agencement selon la revendication 23 ou 24, dans lequel l'adresse de réseau de paquets de données temporaire est une adresse de protocole Internet ou de protocole X.25.

26. Dispositif de mémorisation de programme contenant une séquences d'instructions pour un microprocesseur afin d'amener une station de communication mobile (140) à recevoir un message provenant d'un service de messagerie fourni par un réseau de communication radio numérique, **caractérisé en ce que** ledit message inclut une première adresse de réseau de paquets de données (310) d'un serveur de réseau (150), et que la séquence d'instructions est en outre adaptée afin de:
amener la station de communication mobile (140) à extraire dudit message la première adresse de réseau de paquets de données (310);
amener la station de communication mobile (140), à laquelle une seconde adresse de réseau de paquets de données est allouée, d'établir une session de protocole de paquets de données avec ledit serveur de réseau (150) en utilisant ladite première adresse de réseau de paquets de données (310); et
amener la station de communication mobile (140) à recevoir des paquets de données, adressés à la seconde adresse de réseau de paquets de données, en provenance du serveur de réseau (150) via ladite session de protocole de paquets de données.

27. Dispositif de mémorisation de programme selon la revendication 26, dans lequel le service de messagerie est un service de messages courts (180).

28. Dispositif de mémorisation de programme selon la revendication 26 ou 27, dans lequel le réseau de communication radio numérique est un réseau GSM (Global system for Mobile Communication) fournissant un service GPRS, General Packet Radio Service.

29. Dispositif de mémorisation de programme selon une quelconque des revendications 26 à 28, dans lequel la première adresse de réseau de paquets de données (310) est une adresse de protocole Internet ou de protocole X.25.

30. Dispositif de mémorisation de programme selon une quelconque des revendications 26 à 29, mettant en oeuvre l'étape consistant à amener la station de communication mobile (140) à s'identifier par rapport à la parte de desserte de paquets de données du réseau de communication radio numérique, si la station de communication mobile n'est pas identifiée par rapport à ce service.

31. Dispositif de mémorisation de programme selon la revendication 30, dans lequel l'étape consistant à amener la station de communication mobile (140) à s'identifier inclut d'amener la station de communication mobile (140) à effectuer un rattachement GPRS à un réseau GSM si la station de communication mobile n'est pas rattachée.

32. Dispositif de mémorisation de programme selon une quelconque des revendications 26 à 31, mettant en oeuvre les étapes consistant à:
amener la station de communication mobile (140) à envoyer une demande au réseau de communication radio numérique afin d'activer un service de paquets de données à utiliser par la station de communication mobile, si la station de communication mobile ne comporte pas un tel service de paquet de données activé; et
amener la station de communication mobile (140) à recevoir une adresse de réseau de paquets de données temporaire provenant du réseau de communication radio numérique en réponse à ladite demande, laquelle adresse de réseau de paquets de données temporaire constitue ladite seconde adresse de réseau de paquets de données.

33. Dispositif de mémorisation de programme selon la revendication 32, dans lequel l'étape consistant à amener la station de communication mobile (140) à envoyer une demande inclut d'amener la station de communication mobile (140) à envoyer une demande d'une activation de contexte PDP, Packet Data Protocol, GPRS.

34. Dispositif de mémorisation de programme selon la revendication 32 ou 33, dans lequel l'adresse de réseau de paquets de données temporaire est une adresse de protocole Internet ou de protocole X.25.

35. Format de données de message utilisé pour amorcer le transfert de paquets de données depuis un serveur de réseau (150) vers une station de communication mobile (140) sans interaction avec un utilisateur de la station de communication mobile (140), la station de communication mobile étant la destinataire d'un message ayant ledit format de données de message, le format de données de message incluant un champ avec un code d'activation (305) qui doit être décodé par un programme d'application dans ladite station de communication mobile, **caractérisé en ce que** ledit code d'activation (305) indique au programme d'application que ledit message a été amorcé par un serveur de réseau (150) désirant transférer des paquets de données vers la station de communication mobile (140), dans lequel d'autres champs du format de données de message sont décodés par ledit programme d'application et facilitant ainsi la réception de paquets de données provenant du serveur de réseau (150), et **en ce que** le format de message inclut en outre:
un champ avec une adresse de réseau de paquets de données (310) qui doit être décodée par ledit programme d'application, ladite adresse de réseau de paquets de données indiquant au programme d'application avec quel serveur de réseau (150) il devrait établir une session de protocole de paquets de données.

36. Format de données de message selon la revendication 35, incluant un champ avec une indication de service (330) qui doit être décodée par un programme d'application, ladite indication de service formant le base d'un message présenté à un utilisateur se rapportant à quel service est sur le point d'être amorcé.

37. Format de données de message selon la revendication 35 ou 36, incluant un champ avec une clé de chiffrement (340) qui doit être décodé par un programme d'application, ladite clé de chiffrement étant utilisée par la programme d'application pour calculer une réponse audit message ayant ledit format de données de message, en vue d'une transmission audit serveur de réseau (150).

38. Format de données de message selon la revendication 37, dans lequel le format de données de message inclut une séquence de champ avec l'es informations suivantes:
une version (300) de la mise en page de message SMS utilisée;
un code d'activation GPRS (305);
une adresse de protocole Internet (310) du serveur de réseau;
un numéro de port (320) du serveur de réseau;
une indication de service (330);
une clé de chiffrement (340);
une somme de vérification (350);
une qualité de service (355); et
des caractères isolées (360).
